(19) Europäisches Patentamt
European Patent Office
Office européen des brevets

(11) EP 4 592 353 A1

(12) **EUROPEAN PATENT APPLICATION**
published in accordance with Art. 153(4) EPC

(43) Date of publication:
**30.07.2025 Bulletin 2025/31**

(21) Application number: **23867939.3**

(22) Date of filing: **18.08.2023**

(51) International Patent Classification (IPC):
***C08L 69/00*** *(2006.01)* ***C08K 3/013*** *(2018.01)*
***C08K 3/014*** *(2018.01)*

(52) Cooperative Patent Classification (CPC):
**C08K 3/013; C08K 3/014; C08L 69/00**

(86) International application number:
**PCT/JP2023/029839**

(87) International publication number:
**WO 2024/062815 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 JP 2022150826**

(71) Applicant: **Teijin Limited**
**Osaka-shi, Osaka 530-0005 (JP)**

(72) Inventor: **ISOE Shinsuke**
**Osaka-shi Osaka 530-0005 (JP)**

(74) Representative: **Kraus & Lederer PartGmbB**
**Thomas-Wimmer-Ring 15**
**80539 München (DE)**

# (54) AROMATIC POLYCARBONATE RESIN COMPOSITION AND MOLDED ARTICLE THEREOF

(57) The invention provides an aromatic polycarbonate resin composition that is excellent in thermal stability and moisture and heat resistance, and makes a molded article that has wavelength-selective absorption properties and is further excellent in the thermal stability and photostability of absorption properties, and also a molded article thereof.

The invention is a resin composition including, per (A) 100 parts by weight of an aromatic polycarbonate resin (component A), (B) 0.03 to 1.2 parts by weight of a colorant having an absorption maximum at less than 650 nm (component B), (C) 0.001 to 0.3 parts by weight of a colorant having an absorption maximum at 650 nm or more and less than 870 nm (component C), (D) 0.001 to 0.3 parts by weight of a colorant having an absorption maximum at 870 nm or more and less than 1,000 nm (component D), and (E) 0.003 to 0.5 parts by weight of a phosphorus-based thermal stabilizer and/or a phenol-based thermal stabilizer (component E), the resin composition being configured such that an average value of through-thickness light transmittance of a 3-mm-thick molded article thereof at 400 nm to 870 nm is 1.5% or less.

EP 4 592 353 A1

## Description

### Technical Field

The present invention relates to an aromatic polycarbonate resin composition that is excellent in thermal stability and moisture and heat resistance, and makes a molded article that has wavelength-selective absorption properties and is further excellent in the thermal stability and photostability of absorption properties.

### Background Art

In recent years, autonomous driving technology has been developing rapidly. In autonomous driving technology, infrared sensing systems play an important role. Examples of infrared sensing systems include driver monitoring systems that monitor drivers and LiDAR for detecting other vehicles and buildings, and such sensing commonly uses near-infrared radiation at about 700 nm or more. Then, when performing infrared sensing, light from visible to near-infrared regions becomes noise. Thus, a covering material that allows for transmission in the wavelength range used for sensing and cuts transmission in a lower wavelength range is required. Glass and resins are used for such covering materials. As resins, transparent materials such as acrylic resins and polycarbonate resins are commonly used, but there is a greater need for polycarbonate resins, which have good transparency and are excellent in impact resistance and heat resistance.

Wavelength-selective polycarbonate resins have already been studied in the past. They are technologies that use a plurality of colorants having different absorption wavelength bands together to cut light from the visible light region to some near-infrared region (see PTLs 1 to 6). Particularly in recent years, as shown in PTLs 5 and 6, a technology for cutting light up to relatively long wavelengths of about 1,000 to 1,100 nm has been established. The background to this is that as the autonomous driving level becomes more advanced (Level 4 or higher, etc.), further improvement in sensing accuracy is required, making it necessary to cut sunlight noise up to longer wavelengths.

However, these literatures do not disclose the stability of absorption properties. In reality, a covering material for infrared sensors used for autonomous driving technology is molded to a small thickness of about 1 to 3 mm. Thus, polycarbonate resins having a viscosity average molecular weight of 24,000 or less, that is, those having relatively high fluidity, are preferred. Further, the molding temperature is also a high temperature of 300 to 340°C. Therefore, the thermal stability of wavelength properties during high-temperature molding are extremely important. Further, inside an automobile, resins are in an environment where they are constantly exposed to light, and thus it is important that their wavelength properties remain stable even when exposed to light for a long period of time. That is, for the realization of a safe autonomous driving society, covering materials for infrared sensors are required to have absorption properties with thermal stability and photostability.

### Citation List

#### Patent Literature

PTL 1: JP5040827B
PTL 2: JP6354888B
PTL 3: WO2019/022169
PTL 4: JP6658942B
PTL 5: JP2021-188011A
PTL 6: JP2021-147470A

### Summary of Invention

#### Technical Problem

An object of the invention is to provide an aromatic polycarbonate resin composition that is excellent in thermal stability and moisture and heat resistance, and makes a molded article that has wavelength-selective absorption properties and is further excellent in the thermal stability and photostability of absorption properties, and also a molded article thereof.

Solution to Problem

As a result of extensive research, the present inventors have found that the above problems can be solved by an aromatic polycarbonate resin composition containing a specific colorant and a specific thermal stabilizer. That is, the present inventors have found that the above problems can be solved by the following aromatic polycarbonate resin composition and a molded article thereof.

1. A resin composition including, per (A) 100 parts by weight of an aromatic polycarbonate resin (component A), (B) 0.03 to 1.2 parts by weight of a colorant having an absorption maximum at less than 650 nm (component B), (C) 0.001 to 0.3 parts by weight of a colorant having an absorption maximum at 650 nm or more and less than 870 nm (component C), (D) 0.001 to 0.3 parts by weight of a colorant having an absorption maximum at 870 nm or more and less than 1,000 nm (component D), and (E) 0.003 to 0.5 parts by weight of a phosphorus-based thermal stabilizer and/or a phenol-based thermal stabilizer (component E),
the resin composition being configured such that an average value of through-thickness light transmittance of a 3-mm-thick molded article thereof at 400 nm to 870 nm is 1.5% or less.
2. The resin composition according to the above item 1, wherein an average value of through-thickness light transmittance of a 3-mm-thick molded article thereof at 870 nm to a wavelength at which absorption by the component D is maximum is 1.5% or less.
3. The resin composition according to the above items 1 or 2, wherein the component C and the component D are each at least one colorant selected from the group consisting of an anthraquinone-based colorant, a phthalocyanine-based colorant, a perylene-based colorant, and a heterocyclic colorant.
4. The resin composition according to any one of the above items 1 to 3, including (F) 0.01 to 1 part by weight of a benzotriazole-based UV absorber (component F) per 100 parts by weight of the component A.
5. The resin composition according to any one of the above items 1 to 4, wherein the component A has a viscosity average molecular weight of 24,000 or less.
**6.** A molded article obtainable by molding the resin composition according to any one of the above items 1 to 5.
7. The molded article according to the above item 6, being a covering material for covering an infrared sensor.
8. The molded article according to the above item 7, being a covering material for covering an infrared sensor used for LiDAR for detecting vehicles and buildings.

Advantageous Effects of Invention

The resin composition of the invention is excellent in thermal stability and moisture and heat resistance. In addition, a molded article made thereof has wavelength-selective absorption properties and is further excellent in the thermal stability and photostability of absorption properties. There are multiple standards for infrared light sources for use in infrared sensors in autonomous driving systems, and the required wavelength properties differ depending on the vehicle manufacturer. Thus, the resin composition of the invention can meet the requirements of different vehicle manufacturers. Further, a molded article made of the resin composition of the invention is excellent in the thermal stability and photostability of absorption properties, and thus is stable under any molding conditions and also stable even under conditions exposed to light for a long period of time. Therefore, the resin composition of the invention is useful particularly as a covering material for covering an infrared sensor, especially as a covering material for covering an infrared sensor used for a driver monitoring system that monitors drivers and LiDAR for detecting other vehicles and buildings, and can contribute to future safe autonomous driving systems.

Description of Embodiments

(Component A: Aromatic Polycarbonate Resin)

The aromatic polycarbonate resin used as a component A in the invention is obtained by allowing a dihydric phenol to react with a carbonate precursor. As examples of reaction methods, an interfacial polymerization method, a melt transesterification method, a solid-phase transesterification method for carbonate prepolymers, a ring-opening polymerization method for cyclic carbonate compounds, and the like can be mentioned.
As typical examples of dihydric phenols used here, hydroquinone, resorcinol, 4,4'-biphenol, 1,1-bis(4-hydroxyphenyl)ethane, 2,2-bis(4-hydroxyphenyl)propane (commonly known as bisphenol A), 2,2-bis(4-hydroxy-3-methylphenyl) propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl) oxide, bis(4-hydroxyphenyl) sulfide, bis(4-hydroxyphenyl) sulfoxide, bis(4-hydroxyphenyl)

sulfone, bis(4-hydroxyphenyl) ketone, bis(4-hydroxyphenyl) ester, bis(4-hydroxy-3-methylphenyl) sulfide, 9,9-bis(4-hydroxyphenyl)fluorene, 9,9-bis(4-hydroxy-3-methylphenyl)fluorene, and the like can be mentioned. Preferred dihydric phenols are bis(4-hydroxyphenyl)alkanes. Among them, from the viewpoint of impact resistance, bisphenol A is particularly preferable and versatile.

In the invention, in addition to bisphenol A type polycarbonate resins, which are versatile polycarbonate resins, a special polycarbonate resin produced using other dihydric phenols can also be used as the component A.

For example, polycarbonate resins (homopolymer or copolymer) using, as part or all of the dihydric phenol component, 4,4'-(m-phenylenediisopropylidene)diphenol (hereinafter sometimes abbreviated as "BPM"), 1,1-bis(4-hydroxyphenyl)cyclohexane, 1,1-bis(4-hydroxyphenyl)-3,3,5-trimethylcyclohexane (hereinafter sometimes abbreviated as "Bis-TMC"), 9,9-bis(4-hydroxyphenyl)fluorene, and 9,9-bis(4-hydroxy-3-methylphenyl)fluorene (hereinafter sometimes abbreviated as "BCF") are appropriate for applications where the requirements for resistance to dimensional changes due to water absorption and form stability are particularly stringent. It is preferable that these non-BPA dihydric phenols are used in an amount of 5 mol% or more, particularly 10 mol% or more, of the entire dihydric phenol component constituting the polycarbonate resin.

In particular, in the case where high rigidity and improved hydrolysis resistance are required, it is particularly favorable that the component A constituting the resin composition is any of the following copolymerized polycarbonate resins (1) to (3).

(1) A copolymerized polycarbonate resin in which, in 100 mol% of the dihydric phenol component constituting the polycarbonate resin, BPM is 20 to 80 mol% (more favorably 40 to 75 mol%, and still more favorably 45 to 65 mol%), and BCF is 20 to 80 mol% (more favorably 25 to 60 mol%, and still more favorably 35 to 55 mol%).
(2) A copolymerized polycarbonate resin in which, in 100 mol% of the dihydric phenol component constituting the polycarbonate resin, BPA is 10 to 95 mol% (more favorably 50 to 90 mol%, and still more favorably 60 to 85 mol%), and BCF is 5 to 90 mol% (more favorably 10 to 50 mol%, and still more favorably 15 to 40 mol%).
(3) A copolymerized polycarbonate resin in which, in 100 mol% of the dihydric phenol component constituting the polycarbonate resin, BPM is 20 to 80 mol% (more favorably 40 to 75 mol%, and still more favorably 45 to 65 mol%), and Bis-TMC is 20 to 80 mol% (more favorably 25 to 60 mol%, and still more favorably 35 to 55 mol%).

These special polycarbonate resins may be used alone, and it is also possible that two or more kinds are suitably mixed and used. In addition, it is also possible that they are mixed with a versatile bisphenol A type polycarbonate resin and used.

The production methods for these special polycarbonate resins and their properties are described in detail, for example, in JPH06-172508A, JPH08-27370A, JP2001-55435A, JP2002-117580A, etc.

Incidentally, among the various polycarbonate resins described above, those whose water absorption rate and Tg (glass transition temperature) are made within the following range (i) or (ii) through the adjustment of copolymer composition, etc., have good hydrolysis resistance as polymers themselves and are also remarkably excellent in terms of low warpage after molding, and thus are particularly favorable in the fields where form stability is required.

(i) A polycarbonate resin having a water absorption rate of 0.05 to 0.15%, preferably 0.06 to 0.13%, and a Tg of 120 to 180°C.
(ii) A polycarbonate resin having a Tg of 160 to 250°C, preferably 170 to 230°C, and having a water absorption rate of 0.10 to 0.30%, preferably 0.13 to 0.30%, and more preferably 0.14 to 0.27%.

Here, the water absorption rate of a polycarbonate resin is a value obtained by measuring the moisture content in a disk-shaped test piece (45 mm in diameter and 3.0 mm in thickness) after being immersed in water at 23°C for 24 hours in accordance with ISO 62-1980. In addition, the Tg (glass transition temperature) is a value determined by differential scanning calorimeter (DSC) measurement in accordance with JIS K7121.

As the carbonate precursor, a carbonyl halide, a carbonic acid diester, a haloformate, or the like is used. Specifically, phosgene, diphenyl carbonate, dihaloformates of dihydric phenols, and the like can be mentioned.

In the production of a polycarbonate resin from the dihydric phenol and carbonate precursor by an interfacial polymerization method, a catalyst, a terminal stopper, an antioxidizing agent for preventing the dihydric phenol from oxidation, and the like may be used as necessary. In addition, polycarbonate resins of the invention include a branched polycarbonate resin copolymerized with a trifunctional or higher polyfunctional aromatic compound, a polyester carbonate resin copolymerized with an aromatic or aliphatic (including alicyclic) difunctional carboxylic acid, a copolymerized polycarbonate resin copolymerized with a difunctional alcohol (including alicyclic), and a polyester carbonate resin copolymerized with such a difunctional carboxylic acid and a difunctional alcohol together. In addition, a mixture obtained by mixing two or more obtained polycarbonate resins is also applicable.

A branched polycarbonate resin can impart anti-dripping performance or the like to the resin composition of the

invention. As trifunctional or higher polyfunctional aromatic compounds used for such a branched polycarbonate resin, phloroglucine, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol, and 4-{4-[1,1-bis(4-hydroxyphenyl)ethyl]benzene}-$\alpha,\alpha$-dimethylbenzylphenol, tetra (4-hydroxyphenyl) methane, bis(2,4-dihydroxyphenyl) ketone, and 1,4-bis(4,4-dihydroxytriphenylmethyl)benzene, as well as trimellitic acid, pyromellitic acid, benzophenonetetracarboxylic acid, acid chlorides thereof, and the like, can be mentioned. Among them, 1,1,1-tris(4-hydroxyphenyl)ethane and 1,1,1-tris(3,5-dimethyl-4-hydroxyphenyl)ethane are preferable, and 1,1,1-tris(4-hydroxyphenyl) ethane is particularly preferable.

The polyfunctional aromatic compound-derived structural unit in the branched polycarbonate resin is, in 100 mol% of the total of the dihydric phenol-derived structural unit and the polyfunctional aromatic compound-derived structural unit, preferably 0.01 to 1 mol%, more preferably 0.05 to 0.9 mol%, and still more preferably 0.05 to 0.8 mol%.

In addition, particularly in the case of a melt transesterification method, a branched structural unit may be produced as a side reaction, and such a branched structural unit amount is also preferably 0.001 to 1 mol%, more preferably 0.005 to 0.9 mol%, and still more preferably 0.01 to 0.8 mol% in 100 mol% of the total with the dihydric phenol-derived structural unit. Incidentally, the proportion of this branched structure can be calculated by $^1$H-NMR measurement.

The aliphatic difunctional carboxylic acid is preferably an $\alpha,\omega$-dicarboxylic acid. As aliphatic difunctional carboxylic acids, for example, linear saturated aliphatic dicarboxylic acids, such as sebacic acid (decanedioic acid), dodecanedioic acid, tetradecanedioic acid, octadecanedioic acid, and icosanedioic acid, and alicyclic dicarboxylic acids, such as cyclohexanedicarboxylic acid, can be preferably mentioned. As difunctional alcohols, alicyclic diols are more favorable, and, for example, cyclohexanedimethanol, cyclohexanediol, tricyclodecane dimethanol, and the like are given as examples.

The reaction forms of an interfacial polymerization method, a melt transesterification method, a carbonate prepolymer solid-phase transesterification method, a ring-opening polymerization method for cyclic carbonate compounds, and the like, which are methods for producing the aromatic polycarbonate resin of the invention, are methods well known in various literatures and patent publications.

The melt volume rate (300°C, 1.2-kg load) of the aromatic polycarbonate resin in the invention is not particularly limited, but is preferably 1 to 60 $cm^3$/10 min, more preferably 3 to 30 $cm^3$/10 min, and still more preferably 5 to 20 $cm^3$/10 min. When the aromatic polycarbonate resin has a melt volume rate of less than 1 $cm^3$/10 min, the resulting resin composition may be inferior in fluidity during injection molding and, in this respect, inferior in versatility. Meanwhile, when the aromatic polycarbonate resin has a melt volume rate of more than 60 $cm^3$/10 min, good mechanical properties may not be obtained. Incidentally, the melt volume rate is also referred to as "MVR" and is measured in accordance with ISO 1133.

The viscosity average molecular weight (M) of the aromatic polycarbonate resin in the invention is preferably 24,000 or less, more preferably 22,500 or less, and still more preferably 20,000 or less. When the viscosity average molecular weight is more than 24,000, this leads to poor fluidity, and, therefore, in order to obtain a thin molded article having a thickness of 1 to 3 mm for use as a sensor cover material, molding needs to be performed under high-temperature conditions, whereby the resin or colorant may be likely to thermally decompose. In addition, the lower limit of the viscosity average molecular weight is not particularly set, but is, from the viewpoint of impact resistance, preferably 14,000 or more. Incidentally, for the viscosity average molecular weight (M) in the context of the invention, first, the specific viscosity ($\eta_{SP}$) calculated by the following formula is determined from a solution of 0.7 g of a polycarbonate resin dissolved in 100 ml of methylene chloride at 20°C using an Ostwald viscometer:

$$\text{specific viscosity } (\eta_{SP}) = (t - t_0)/t_0$$

[$t_0$ is the number of seconds for methylene chloride to fall, and t is the number of seconds for the sample solution to fall], and the viscosity average molecular weight M is calculated from the determined specific viscosity ($\eta_{SP}$) by the following formula.

$$\eta_{SP}/c = [\eta] + 0.45 \times [\eta]^2 c$$

(wherein [$\eta$] is intrinsic viscosity)

$$[\eta] = 1.23 \times 10^{-4} M^{0.83}$$

$$c = 0.7$$

It is also possible to use a polycarbonate-polydiorganosiloxane copolymer resin as the aromatic polycarbonate

resin of the invention. It is preferable that the polycarbonate-polydiorganosiloxane copolymer resin is a copolymer resin prepared by copolymerizing a dihydric phenol represented by the following general formula (1) and a hydroxyaryl-terminated polydiorganosiloxane represented by the following general formula (3).

[Chemical formula 1]

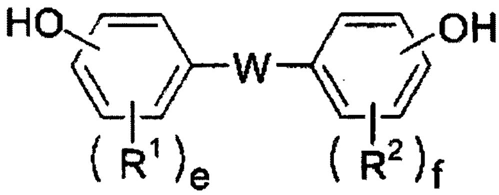

· · · (1)

[In the above general formula (1), $R^1$ and $R^2$ each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, with the proviso that when there are a plurality of each, they may be the same or different, e and f are each an integer of 1 to 4, and W is a single bond or at least one group selected from the group consisting of groups represented by the following general formula (2).]

[Chemical formula 2]

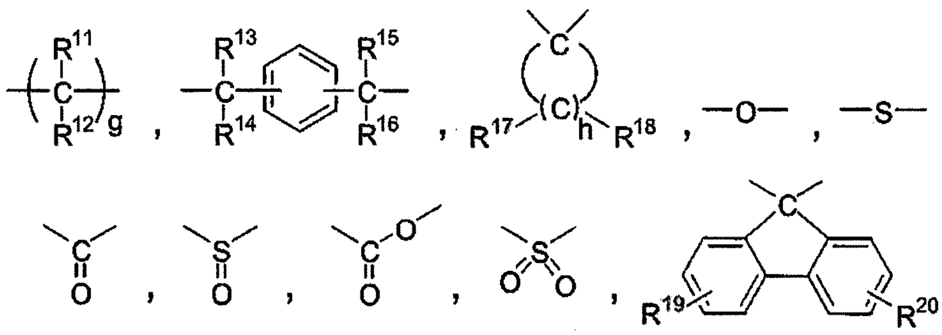

· · · (2)

[In the above general formula (2), $R^{11}$, $R^{12}$, $R^{13}$, $R^{14}$, $R^{15}$, $R^{16}$, $R^{17}$, and $R^{18}$ each independently represent a group selected from the group consisting of a hydrogen atom, an alkyl group having 1 to 18 carbon atoms, an aryl group having 6 to 14 carbon atoms, and an aralkyl group having 7 to 20 carbon atoms, $R^{19}$ and $R^{20}$ each independently represent a group selected from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, with the proviso that when there are a plurality of each, they may be the same or different, g is an integer of 1 to 10, and h is an integer of 4 to 7.]

[Chemical formula 3]

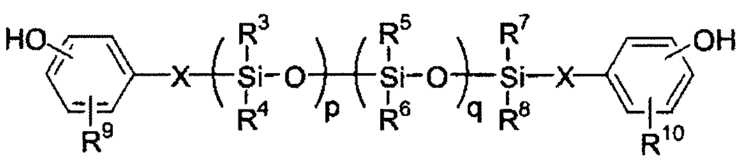

· · · (3)

[In the above general formula (3), $R^3$, $R^4$, $R^5$, $R^6$, $R^7$, and $R^8$ each independently represent a hydrogen atom, an alkyl group having 1 to 12 carbon atoms, or a substituted or unsubstituted aryl group having 6 to 12 carbon atoms, $R^9$ and

$R^{10}$ each independently represent a hydrogen atom, a halogen atom, an alkyl group having 1 to 10 carbon atoms, or an alkoxy group having 1 to 10 carbon atoms, p is a natural number, q is 0 or a natural number, and p + q is a natural number of 10 to 300. X is a divalent aliphatic group having 2 to 8 carbon atoms.]

As dihydric phenols (I) represented by general formula (1), for example, 4,4'-dihydroxybiphenyl, bis(4-hydroxyphenyl) methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl) propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, 1,3-bis(4-hydroxyphenyl)-5,7-dimethyladamantane, and the like can be mentioned.

Among them, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, and 1,4-bis{2-(4-hydroxyphenyl)propyl}benzene are preferable, and, in particular, 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are preferable. Among them, 2,2-bis(4-hydroxyphenyl)propane, which is excellent in strength and has good durability, is most favorable. In addition, they may be used alone, and it is also possible to use a combination of two or more kinds.

As hydroxyaryl-terminated polydiorganosiloxanes represented by the above general formula (3), the compounds shown below are favorably used, for example.

[Chemical formula 4]

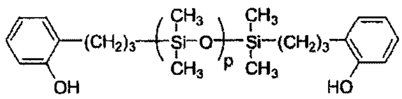
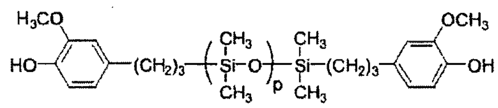
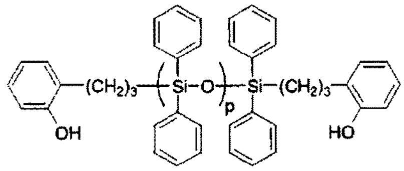
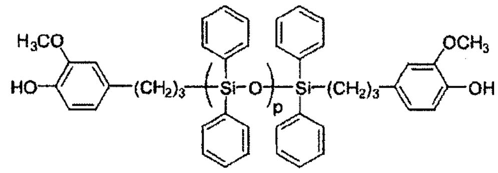
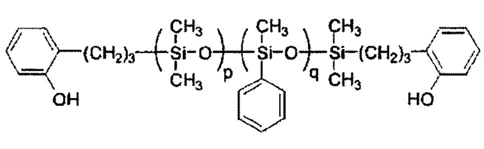
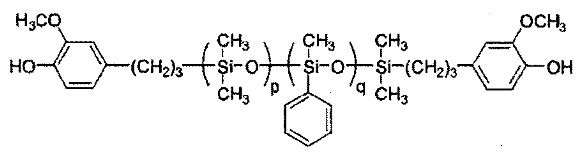
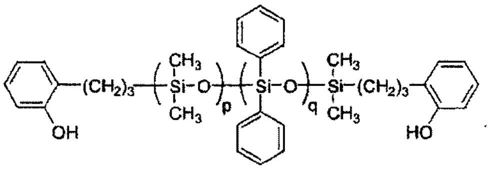
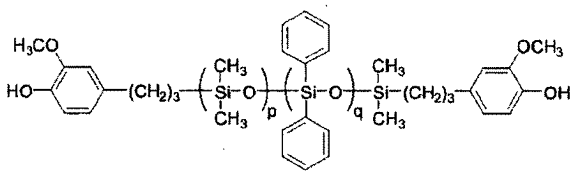

The hydroxyaryl-terminated polydiorganosiloxane (II) is easily produced by subjecting a phenol having an olefinically unsaturated carbon-carbon bond, favorably vinylphenol, 2-allylphenol, isopropenylphenol, or 2-methoxy-4-allylphenol, to a hydrosilylation reaction at the end of the polysiloxane chain having a predetermined degree of

polymerization. Among them, (2-allylphenol)-terminated polydiorganosiloxane and (2-methoxy-4-allylphenol)-terminated polydiorganosiloxane are preferable, and, in particular, (2-allylphenol)-terminated polydimethylsiloxane and (2-methoxy-4-allylphenol)-terminated polydimethylsiloxane are preferable. The hydroxyaryl-terminated polydiorganosiloxane (II) preferably has a molecular weight distribution (Mw/Mn) of 3 or less. For the exhibition of even better low outgassing properties during high-temperature molding and low-temperature impact properties, the molecular weight distribution (Mw/Mn) is more preferably 2.5 or less, and still more preferably 2 or less. When the distribution is more than the upper limit of this favorable range, the outgassing amount during high-temperature molding increases, and also the low-temperature impact properties may be inferior.

In addition, in order to achieve a high level of impact resistance, the appropriate degree of diorganosiloxane polymerization (p + q) of the hydroxyaryl-terminated polydiorganosiloxane (II) is 10 to 300. The degree of polydiorganosiloxane polymerization (p + q) is preferably 10 to 200, more preferably 12 to 150, and still more preferably 14 to 100. When the polymerization degree is less than the lower limit of this favorable range, the impact resistance, which is a characteristic of a polycarbonate-polydiorganosiloxane copolymer resin, is not effectively exhibited, while a polymerization degree of more than the upper limit of this favorable range leads to an appearance defect.

The polydiorganosiloxane content based on the overall weight of the polycarbonate-polydiorganosiloxane copolymer resin is preferably 0.1 to 50 wt%. The polydiorganosiloxane component content is more preferably 0.5 to 30 wt%, and still more preferably 1 to 20 wt%. A content of not less than the lower limit of this favorable range leads to excellent impact resistance and flame retardancy, while a content of not more than the upper limit of this favorable range makes it easier to obtain a stable appearance that is less likely to be affected by the molding conditions. The degree of polydiorganosiloxane polymerization and the polydiorganosiloxane content can be calculated by $^1$H-NMR measurement.

In the invention, it is possible to use only a single kind of hydroxyaryl-terminated polydiorganosiloxane (II), and it is also possible to use two or more kinds.

In addition, without interfering with the invention, comonomers other than the dihydric phenol (I) and the hydroxyaryl-terminated polydiorganosiloxane (II) may also be used together within a range of 10 wt% or less based on the overall weight of the copolymer.

In the invention, a mixed solution containing an oligomer having a terminal chloroformate group is prepared in advance through a reaction between a dihydric phenol (I) and a carbonic acid ester-forming compound in a liquid mixture of a water-insoluble organic solvent and an aqueous alkali solution.

In the formation of an oligomer of the dihydric phenol (I), the dihydric phenol (I) used in the method of the invention may be fully converted into an oligomer at once, or it is also possible that a portion thereof is used as a post-added monomer and added as a reaction raw material to the subsequent interfacial polycondensation reaction. A post-added monomer is added in order to allow the subsequent polycondensation reaction to quickly proceed, and there is no need to bother adding it if not unnecessary.

The technique for this oligomer formation reaction is not particularly limited, but a technique in which the reaction is performed in a solvent in the presence of an acid binder is usually favorable.

The proportion of the carbonic acid ester-forming compound used is only required to be suitably adjusted considering the stoichiometric ratio (equivalent) of the reaction. In addition, in the case where a gaseous carbonic acid ester-forming compound such as phosgene is used, a method in which the compound is blown into the reaction system can be favorably employed.

As the acid binder, for example, alkali metal hydroxides such as sodium hydroxide and potassium hydroxide, alkali metal carbonates such as sodium carbonate and potassium carbonate, organic bases such as pyridine, mixtures thereof, and the like are used. The proportion of the acid binder used is also only required to be, as above, suitably specified considering the stoichiometric ratio (equivalent) of the reaction. Specifically, it is preferable to use two equivalents, or a slight excess, of the acid binder with respect to the number of moles of the dihydric phenol (I) used to form an oligomer (one mole is usually equal to two equivalents).

As the solvent, any of various solvents inert to the reaction, such as those used in the production of known polycarbonate resins, may be used alone or as a mixed solvent. As typical examples, for example, hydrocarbon solvents such as xylene, halogenated hydrocarbon solvents such as methylene chloride and chlorobenzene, and the like can be mentioned. It is particularly favorable to use a halogenated hydrocarbon solvent such as methylene chloride.

The reaction pressure for oligomer formation is not particularly limited, and may be normal pressure, increased pressure, or reduced pressure, but it is usually advantageous to perform the reaction under normal pressure. The reaction temperature is selected from the range of -20 to 50°C, and, because polymerization is often accompanied by the generation of heat, it is desirable to perform cooling with water or ice. The reaction time depends on other conditions and is not necessarily specified, but is usually 0.2 to 10 hours. The pH range of the oligomer formation reaction is the same as that in the known interfacial reaction conditions, and the pH is always adjusted to 10 or higher.

In the invention, after a mixed solution containing a dihydric phenol (I) oligomer having a terminal chloroformate group is thus obtained, while stirring the mixed solution, a hydroxyaryl-terminated polydiorganosiloxane (II) represented by general formula (3), which has been highly purified to a molecular weight distribution (Mw/Mn) of 3 or less, is added to

the dihydric phenol (I), and the hydroxyaryl-terminated polydiorganosiloxane (II) and the oligomer are subjected to interfacial polycondensation, thereby giving a polycarbonate-polydiorganosiloxane copolymer resin.

When the interfacial polycondensation reaction is performed, an acid binder may be suitably added considering the stoichiometric ratio (equivalent) of the reaction. As the acid binder, for example, alkali metal hydroxides such as sodium hydroxide and potassium hydroxide, alkali metal carbonates such as sodium carbonate and potassium carbonate, organic bases such as pyridine, mixtures thereof, and the like are used. Specifically, in the case where the hydroxyaryl-terminated polydiorganosiloxane (II) used, or a portion of the dihydric phenol (I) as described above, is added as a post-added monomer at this reaction stage, it is preferable to use two equivalents, or an excess, of alkali with respect to the total number of moles of the post-added portion of the dihydric phenol (I) and the hydroxyaryl-terminated polydiorganosiloxane (II) (one mole is usually equal to two equivalents).

Polycondensation though the interfacial polycondensation reaction between the dihydric phenol (I) oligomer and the hydroxyaryl-terminated polydiorganosiloxane (II) is performed by vigorously stirring the above liquid mixture.

In such a polymerization reaction, a terminal stopper or a molecular weight regulator is usually used. As the terminal stopper, a compound having a monohydric phenolic hydroxyl group can be mentioned, and, in addition to usual phenol, p-tert-butylphenol, p-cumylphenol, tribromophenol, and the like, long-chain alkylphenols, aliphatic carboxylic acid chlorides, aliphatic carboxylic acids, hydroxybenzoic acid alkyl esters, hydroxyphenyl alkyl acid esters, and alkyl ether phenols can also be given as examples. The amount thereof used is within a range of 100 to 0.5 mol, preferably 50 to 2 mol, per 100 mol of all the dihydric phenol-based compounds used, and it is naturally possible to use two or more kinds of compounds together.

In order to accelerate the polycondensation reaction, a catalyst, such as triethylamine or a like tertiary amine or a quaternary ammonium salt, may be added.

The reaction time for this polymerization reaction is preferably 30 minutes or more, and still more preferably 50 minutes or more. If desired, a small amount of antioxidant such as sodium sulfite or hydrosulfide may be added.

A branching agent can be used together with the above dihydric phenol-based compound to obtain a branched polycarbonate-polydiorganosiloxane copolymer resin. As trifunctional or higher polyfunctional aromatic compounds used for such a branched polycarbonate-polydiorganosiloxane copolymer resin, phloroglucine, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol, and 4-{4-[1,1-bis(4-hydroxyphenyl)ethyl]benzene}-$\alpha$,$\alpha$-dimethylbenzylphenol, tetra (4-hydroxyphenyl) methane, bis(2,4-dihydroxyphenyl) ketone, and 1,4-bis(4,4-dihydroxytriphenylmethyl)benzene, as well as trimellitic acid, pyromellitic acid, benzophenonetetracarboxylic acid, acid chlorides thereof, and the like, can be mentioned. Among them, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable. The proportion of the polyfunctional compound in the branched polycarbonate-polydiorganosiloxane copolymer resin is, based on the overall amount of the branched polycarbonate-polydiorganosiloxane copolymer resin, preferably 0.001 to 1 mol%, more preferably 0.005 to 0.9 mol%, still more preferably 0.01 to 0.8 mol%, and particularly preferably 0.05 to 0.4 mol%. Incidentally, this branched structure amount can be calculated by $^1$H-NMR measurement.

The reaction pressure may be reduced pressure, normal pressure, or increased pressure, but the reaction can usually be favorably performed at normal pressure or at around the pressure of the reaction system itself. The reaction temperature is selected from the range of -20 to 50°C, and, because polymerization is often accompanied by the generation of heat, it is desirable to perform cooling with water or ice. The reaction time varies depending on other conditions such as the reaction temperature and is not necessarily specified, but is usually 0.5 to 10 hours.

In some cases, the obtained polycarbonate-polydiorganosiloxane copolymer resin can be suitably subjected to a physical treatment (mixing, fractionation, etc.) and/or a chemical treatment (polymer reaction, crosslinking treatment, partial decomposition treatment, etc.) to provide the polycarbonate-polydiorganosiloxane copolymer resin with the desired reduced viscosity [$\eta_{SP}$/c].

The obtained reaction product (crude product) can be subjected to various post-treatments, such as known separation and purification processes, and recovered as a polycarbonate-polydiorganosiloxane copolymer resin with the desired purity (degree of purification).

The average size of the polydiorganosiloxane domains in the polycarbonate-polydiorganosiloxane copolymer resin molded article is preferably within a range of 1 to 40 nm. This average size is more preferably 1 to 30 nm, and still more preferably 5 to 25 nm. When the average size is less than the lower limit of this favorable range, impact resistance and flame retardancy may not be fully exhibited, while when it is more than the upper limit of this favorable range, impact resistance may not be stably exhibited. As a result, a resin composition excellent in impact resistance and appearance is provided.

The average domain size of the polydiorganosiloxane domains in the polycarbonate-polydiorganosiloxane copolymer resin molded article in the invention was evaluated by Small Angle X-ray Scattering (SAXS) technique. A small angle X-ray scattering technique is a method for measuring diffuse scattering/diffraction that occurs in a small-angle region

within a scattering angle (2θ) < 10°. In this small angle X-ray scattering technique, when regions with a size of about 1 to 100 nm having different electron densities are present in a material, the diffuse scattering of X-rays is measured from the difference in electron density. Based on this scattering angle and scattering intensity, the particle size of the measurement object is determined. In the case of a polycarbonate-polydiorganosiloxane copolymer resin having an agglomerated structure with the polydiorganosiloxane domains dispersed in the polycarbonate polymer matrix, the diffuse scattering of X-rays is caused by the electron density difference between the polycarbonate matrix and the polydiorganosiloxane domains. The scattering intensity I at each scattering angle (2θ) within a range where the scattering angle (2θ) is less than 10° is measured to measure the small angle X-ray scattering profile, and, assuming that the polydiorganosiloxane domains are spherical domains, and that there is a variation in particle size distribution, simulation is performed based on a hypothetical particle size and a hypothetical particle size distribution model using commercially available analysis software to determine the average size of the polydiorganosiloxane domains. Small angle X-ray scattering allows the average size of polydiorganosiloxane domains dispersed in a polycarbonate polymer matrix, which cannot be accurately measured by observation under a transmission electron microscope, to be measured accurately, simply, and with good reproducibility. The average domain size means the number average of the individual domain sizes. The term "average domain size" used in connection with the invention refers to a measured value obtained by measuring a 1.0-mm-thick portion of a three-stage plate prepared by the method described in the Examples using this small angle X-ray scattering technique. In addition, the analysis is performed using an isolated particle model that does not take into account interparticle interactions (interparticle interference).

(Component B: Colorant Having Absorption Maximum at Less than 650 nm)

The colorant used in the invention as a component B is a colorant having an absorption maximum at less than 650 nm. Incidentally, the lower limit of the absorption maximum is not particularly specified, but is preferably 400 nm or more. The colorant can be selected from dyes (organic, inorganic), pigments (organic, inorganic), and the like, and is not particularly limited as long as the aromatic polycarbonate resin composition intended by the invention can be obtained. As the colorant, it is preferable to use a dye because dyes are unlikely to cause diffused reflection of light on the surface of particles. As dye-based colorants, for example, anthraquinone-based colorants, perinone-based colorants, perylene-based colorants, methine-based colorants, azo-based colorants, quinoline-based colorants, phthalocyanine-based colorants, squarylium-based colorants, heterocyclic colorants, and the like can be mentioned.

The content of component B is 0.03 to 1.2 parts by weight, preferably 0.05 to 1.0 parts by weight, and more preferably 0.1 to 0.5 parts by weight per 100 parts by weight of the component A. In the case where the content of component B is less than 0.03 parts by weight, sufficient cutting properties at 400 nm to 870 nm cannot be obtained. Meanwhile, when the content is more than 1.2 parts by weight, the thermal stability of the resin composition deteriorates.

(Component C: Colorant Having Absorption Maximum at 650 nm or More and Less than 870 nm)

The colorant used in the invention as a component C is a colorant having an absorption maximum at 650 nm or more and less than 870 nm. The colorant can be selected from dyes (organic, inorganic), pigments (organic, inorganic), and the like, and is not particularly limited as long as the aromatic polycarbonate resin composition intended by the invention can be obtained. As the colorant, it is preferable to use a dye because dyes are unlikely to cause diffused reflection of light on the surface of particles. As dye-based colorants, for example, anthraquinone-based colorants, perinone-based colorants, perylene-based colorants, methine-based colorants, azo-based colorants, quinoline-based colorants, phthalocyanine-based colorants, squarylium-based colorants, heterocyclic colorants, and the like can be mentioned. Among them, anthraquinone-based colorants, phthalocyanine-based colorants, perylene-based colorants, and heterocyclic colorants, which have high heat resistance, are more preferable.

The content of component C is 0.001 to 0.3 parts by weight, preferably 0.003 to 0.2 parts by weight, and more preferably 0.005 to 0.1 parts by weight per 100 parts by weight of the component A. In the case where the content of component C is less than 0.001 parts by weight, sufficient cutting properties at 400 nm to 870 nm cannot be obtained. Meanwhile, when the content is more than 0.3 parts by weight, the thermal stability of the resin composition deteriorates.

(Component D: Colorant Having Absorption Maximum at 870 nm or More and Less than 1,000 nm)

The colorant used in the invention as a component D is a colorant having an absorption maximum at 870 nm or more and less than 1,000 nm. The colorant can be selected from dyes (organic, inorganic), pigments (organic, inorganic), and the like, and is not particularly limited as long as the aromatic polycarbonate resin composition intended by the invention can be obtained. As the colorant, it is preferable to use a dye because dyes are unlikely to cause diffused reflection of light on the surface of particles. As dye-based colorants, for example, anthraquinone-based colorants, perinone-based colorants, perylene-based colorants, methine-based colorants, azo-based colorants, quinoline-based

colorants, phthalocyanine-based colorants, squarylium-based colorants, heterocyclic colorants, and the like can be mentioned. Among them, anthraquinone-based colorants, phthalocyanine-based colorants, perylene-based colorants, and heterocyclic colorants, which have high heat resistance, are more preferable.

The content of component D is 0.001 to 0.3 parts by weight, preferably 0.003 to 0.2 parts by weight, and more preferably 0.005 to 0.1 parts by weight per 100 parts by weight of the component A. In the case where the content of component D is less than 0.001 parts by weight, sufficient cutting properties at 870 nm to the wavelength at which absorption by the component D is maximum cannot be obtained. Meanwhile, when the content is more than 0.3 parts by weight, the thermal stability of the resin composition deteriorates.

(Component E: Thermal Stabilizer)

The aromatic polycarbonate resin composition of the invention contains a phosphorus-based thermal stabilizer and/or a phenol-based thermal stabilizer. A phosphorus-based thermal stabilizer improves thermal stability during manufacturing or molding processing, thereby improving mechanical properties, color, and molding stability. As phosphorus-based thermal stabilizers, phosphorous acid, phosphoric acid, phosphonous acid, phosphonic acid, esters thereof, tertiary phosphines, and the like can be given as examples. Specifically, as phosphite compounds, for example, triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, 2,2-methylenebis(4,6-di-tert-butylphenyl)octyl phosphite, tris(diethylphenyl) phosphite, tris(di-isopropylphenyl) phosphite, tris(di-n-butylphenyl) phosphite, tris(2,4-di-tert-butylphenyl) phosphite, tris(2,6-di-tert-butylphenyl) phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite, dicyclohexyl pentaerythritol diphosphite, and the like can be mentioned. Further, as other phosphite compounds, those that react with dihydric phenols and have a cyclic structure can also be used. For example, 2,2'-methylenebis(4,6-di-tert-butylphenyl) (2,4-di-tert-butylphenyl)phosphite, 2,2'-methylenebis(4,6-di-tert-butylphenyl) (2-tert-butyl-4-methylphenyl)phosphite, 2,2'-methylenebis(4-methyl-6-tert-butylphenyl) (2-tert-butyl-4-methylphenyl) phosphite, 2,2'-ethylidenebis(4-methyl-6-tert-butylphenyl)(2-tert-butyl-4-methylphenyl)phosphite, and the like can be mentioned. As phosphate compounds, tributyl phosphate, trimethyl phosphate, tricresyl phosphate, triphenyl phosphate, trichlorophenyl phosphate, triethyl phosphate, diphenyl cresyl phosphate, diphenyl monoorthoxenyl phosphate, tributoxyethyl phosphate, dibutyl phosphate, dioctyl phosphate, diisopropyl phosphate, and the like can be mentioned, and triphenyl phosphate and trimethyl phosphate are preferable.

As phosphonite compounds, tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, bis(2,6-di-tert-butylphenyl)-3-phenyl-phenylphosphonite, and the like can be mentioned, tetrakis(di-tert-butylphenyl)-biphenylene diphosphonite and bis(di-tert-butylphenyl)-phenyl-phenylphosphonite are preferable, and tetrakis(2,4-di-tert-butylphenyl)-biphenylene diphosphonite and bis(2,4-di-tert-butylphenyl)-phenyl-phenylphosphonite are more preferable. Such phosphonite compounds can be used together with the above phosphite compounds having an aryl group with two or more alkyl groups substituted, and thus are preferable. As phosphonate compounds, dimethyl benzenephosphonate, diethyl benzenephosphonate, dipropyl benzenephosphonate, and the like can be mentioned. As tertiary phosphines, triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine, diphenylbenzylphosphine, and the like can be given as examples. A particularly preferred tertiary phosphine is triphenylphosphine. The above phosphorus-based thermal stabilizers can be use alone, and it is also possible to use a mixture of two or more kinds. Among the above phosphorus-based thermal stabilizers, it is preferable to incorporate an alkyl phosphate compound typified by trimethyl phosphate. In addition, combined use of such an alkyl phosphate compound with a phosphite compound and/or a phosphonite compound is also a preferred mode.

Phenol-based thermal stabilizers are not particularly limited as long as they have antioxidant functions. For example, n-octadecyl-3-(4'-hydroxy-3',5'-di-t-butylphenyl)propionate, tetrakis{methylene-3-(3',5'-di-t-butyl-4-hydroxyphenyl)propionate}methane, distearyl (4-hydroxy-3-methyl-5-t-butylbenzyl)malonate, triethylene glycol-bis{3-(3-t-butyl-5-methyl-4-hydroxyphenyl)propionate}, 1,6-hexanediol-bis{3-(3,5-di-t-butyl-4-hydroxyphenyl)propionate}, pentaerythrityl-tetrakis{3-(3,5-di-t-butyl-4-hydroxyphenyl)propionate}, 2,2-thiodiethylenebis{3-(3,5-di-t-butyl-4-hydroxyphenyl) propionate}, 2,2-thiobis(4-methyl-6-t-butylphenol), 1,3,5-trimethyl-2,4,6-tris(3,5-di-t-butyl-4-hydroxybenzyl)benzene, tris(3,5-di-t-butyl-4-hydroxybenzyl)-isocyanurate, 2,4-bis{ (octylthio)methyl}-o-cresol, isooctyl-3-(3,5-di-t-butyl-4-hydroxyphenyl) propionate, 2,5,7,8-tetramethyl-2(4',8',12'-trimethyltridecyl)chroman-6-ol, 3,3',3",5,5',5"-hexa-t-butyl-a,a',a"-(mesitylene-2,4,6-triyl)tri-p-cresol, and the like can be mentioned.

Among them, n-octadecyl-3-(4'-hydroxy-3',5'-di-t-butylphenyl)propionate, pentaerythrityl-tetrakis{3-(3,5-di-t-butyl-4-hydroxyphenyl)propionate}, 3,3',3",5,5',5"-hexa-t-butyl-a,a',a"-(mesitylene-2,4,6-triyl)tri-p-cresol, 2,2-thiodiethylenebis{3-(3,5-di-t-butyl-4-hydroxyphenyl)propionate}, and the like are preferable.

The content of component E is 0.003 to 0.5 parts by weight, preferably 0.005 to 0.3 parts by weight, and more preferably 0.01 to 0.2 parts by weight per 100 parts by weight of the component A. In the case where the content of component E is less than 0.003 parts by weight, the thermal stability of the resin composition deteriorates, and the thermal stability of absorption properties also deteriorates. Meanwhile, when the content is more than 0.5 parts by weight, the moisture and heat resistance of the resin composition deteriorates.

(Component F: Benzotriazole-Based UV Absorber)

It is preferable that the aromatic polycarbonate resin composition of the invention contains a benzotriazole-based UV absorber. As benzotriazole-based UV absorbers, for example, 2-(2-hydroxy-5-methylphenyl)benzotriazole, 2-(2-hydroxy-5-tert-octylphenyl)benzotriazole, 2-[2-hydroxy-3,5-bis(α,α-dimethylbenzyl)phenyl]-2H-benzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole, as well as polymers having a 2-hydroxyphenyl-2H-benzotriazole skeleton, such as a copolymer of 2-(2'-hydroxy-5-methacryloxyethylphenyl)-2H-benzotriazole and a vinyl-based monomer copolymerizable with such a monomer and a copolymer of 2-(2'-hydroxy-5-acryloxyethylphenyl)-2H-benzotriazole and a vinyl-based monomer copolymerizable with such a monomer, and the like, are given as examples. Further, the above UV absorber may also be a polymer type UV absorber that has the structure of a radically polymerizable monomer compound and thus is obtained by copolymerizing such an UV-absorbing monomer and/or a photostable monomer with a monomer such as an alkyl (meth)acrylate. As the UV-absorbing monomers, compounds containing a benzotriazole skeleton in the ester substituent of a (meth)acrylic acid ester are given as favorable examples. Among them, 2-[2-hydroxy-3,5-bis(α,α-dimethylbenzyl)phenyl]-2H-benzotriazole typified by TINUVIN 234 (BASF Japan Ltd.) and 2-(2-hydroxy-3-tert-butyl-5-methylphenyl)-5-chlorobenzotriazole typified by the TINUVIN 326 (BASF Japan Ltd.) are more preferable.

The content of component F is preferably 0.01 to 1 part by weight, more preferably 0.05 to 0.8 parts by weight, and still more preferably 0.1 to 0.5 parts by weight per 100 parts by weight of the component A. In the case where the content of component F is less than 0.01 parts by weight, the photostability of absorption properties may deteriorate, while a content of more than 1 part by weight may lead to reduced thermal stability of the resin composition.

(Other Additives)

In order to improve the thermal stability and design features of the aromatic polycarbonate resin composition of the invention, additives used for their improvement are advantageously used. Hereinafter, these additives will be specifically described.

(I) Thermal Stabilizers Other than Component E

The aromatic polycarbonate resin composition of the invention can also incorporate other thermal stabilizers besides the phosphorus-based thermal stabilizers and phenol-based thermal stabilizers described above. As such other thermal stabilizers, for example, lactone-based stabilizers typified by a reaction product of 3-hydroxy-5,7-di-tert-butyl-furan-2-one with o-xylene are given as favorable examples. Details of such stabilizers are described in JPH07-233160A. Such a compound is commercially available as Irganox HP-136 (trademark, manufactured by CIBA SPECIALTY CHEMICALS), and this compound can be used. Further, stabilizers obtained by mixing this compound with various phosphite compounds and hindered phenol compounds are commercially available. For example, Irganox HP-2921 manufactured by the above company is given as a favorable example. The content of lactone-based stabilizer is preferably 0.0005 to 0.05 parts by weight, more preferably 0.001 to 0.03 parts by weight, per 100 parts by weight of the component A. In addition, as other stabilizers, sulfur-containing stabilizers such as pentaerythritol tetrakis(3-mercaptopropionate), pentaerythritol tetrakis(3-lauryl thiopropionate), and glycerol-3-stearyl thiopropionate are given as examples. The content of such sulfur-containing stabilizer is preferably 0.001 to 0.1 parts by weight, more preferably 0.01 to 0.08 parts by weight, per 100 parts by weight of the component A. The polycarbonate resin composition of the invention can incorporate an epoxy compound as necessary. Such an epoxy compound is incorporated for the purpose of suppressing mold corrosion,

and basically those having an epoxy functional group are all applicable. As specific examples of preferred epoxy compounds, 3,4-epoxycyclohexylmethyl-3',4'-epoxycyclohexylcarboxylate, 1,2-epoxy-4-(2-oxiranyl)cyclohexane adducts of 2,2-bis(hydroxymethyl)-1-butanol, copolymers of methyl methacrylate and glycidyl methacrylate, copolymers of styrene and glycidyl methacrylate, and the like can be mentioned. The content of such epoxy compound is preferably 0.003 to 0.2 parts by weight, more preferably 0.004 to 0.15 parts by weight, and still more preferably 0.005 to 0.1 parts by weight based on 100 parts by weight of the component A.

(II) Release Agent

In order to further improve the mold release properties at the time of melt-forming, the aromatic polycarbonate resin composition of the invention may also incorporate a release agent without interfering with the object of the invention.

As such release agents, higher fatty acid esters of monohydric or polyhydric alcohols, higher fatty acids, paraffin wax, beeswax, olefin-based waxes, olefin-based waxes containing a carboxy group and/or a carboxylic anhydride group, silicone oil, organopolysiloxane, and the like can be mentioned. As higher fatty acid esters, partial esters or full esters of a monohydric or polyhydric alcohol having 1 to 20 carbon atoms and a saturated fatty acid having 10 to 30 carbon atoms are preferable. As such partial esters or full esters of a monohydric or polyhydric alcohol and a saturated fatty acid, for example, monoglyceride stearate, diglyceride stearate, triglyceride stearate, monosorbitate stearate, monoglyceride behenate, behenyl behenate, pentaerythritol monostearate, pentaerythritol tetrastearate, pentaerythritol tetrapelargonate, propyleneglycol monostearate, stearyl stearate, palmityl palmitate, butyl stearate, methyl laurate, isopropyl palmitate, biphenyl biphenate, sorbitan monostearate, 2-ethylhexyl stearate, and the like can be mentioned. Among them, monoglyceride stearate, triglyceride stearate, pentaerythritol tetrastearate, and behenyl behenate are preferably used. As higher fatty acids, saturated fatty acids having 10 to 30 carbon atoms are preferable. As such fatty acids, myristic acid, lauric acid, palmitic acid, stearic acid, behenic acid, and the like can be mentioned.

These release agents may be used alone, and it is also possible to use two or more kinds together. The content of such release agent is preferably 0.01 to 5 parts by weight per 100 parts by weight of the component A.

<Method for Producing Resin Composition>

For producing the aromatic polycarbonate resin composition of the invention, any method may be employed. For example, a method in which the components and optionally other components are premixed, then melt-kneaded, and pelletized can be mentioned. As means for premixing, a Nauta mixer, a V type blender, a Henschel mixer, a mechanochemical apparatus, an extrusion mixer, and the like can be mentioned. During premixing, in some cases, granulation can be performed using an extrusion granulator or a briquetting machine. After premixing, the mixture is melt-kneaded in a melt kneader typified by a vented twin-screw extruder and pelletized in a pelletizer or like appliance. Other examples of melt kneaders include a Banbury mixer, a kneading roll, and a thermostatic stirring vessel, but a vented twin-screw extruder is preferable. Alternatively, it is also possible to employ a method in which the components and optionally other components are, without being premixed, each independently fed to a melt kneader typified by a twin-screw extruder.

<Regarding Molded Article>

From the aromatic polycarbonate resin composition of the invention obtained as described above, various products can be produced usually by injection-molding pellets produced as described above. Further, it is also possible that the resin melt-kneaded in an extruder is, without once being formed into pellets, directly molded into a sheet, a film, a profile extrusion, or an injection-molded article. In such injection molding, molded articles can be obtained not only by usual molding methods but also using, suitably depending on the purpose, injection compression molding, injection press molding, gas-assisted injection molding, foam molding (including molding by injecting a supercritical fluid), insert molding, in-mold coating molding, heat-insulating molding, rapid heating and cooling molding, two-color molding, sandwich molding, ultra-high speed injection molding, and like injection molding methods. The advantages of these various molding methods are already widely known. In addition, for molding, either the cold runner technique or the hot runner technique can be selected. In addition, the resin composition of the invention can also be extrusion-molded into various profile extrusions and sheets.

It is necessary that in a molded article made of the aromatic polycarbonate resin composition of the invention of the present application, the average value of through-thickness light transmittance of a 3-mm-thick molded article at 400 nm to 870 nm is 1.5% or less. The average value of light transmittance is more preferably 1.0% or less, and still more preferably 0.5% or less. When the average value of light transmittance is more than 1.5%, the amount of sunlight that becomes noise increases, adversely affecting sensing. Incidentally, the lower limit of the average value of light transmittance is not particularly set, but is preferably 0%.

In addition, a molded article made of the aromatic polycarbonate resin composition of the invention of the present

application is preferably such that the average value of through-thickness light transmittance of a 3-mm-thick molded article at 870 nm to the wavelength at which absorption by the component D is maximum is 1.5% or less, more preferably 1.0% or less, and still more preferably 0.5% or less. When the average value of light transmittance is more than 1.5%, the amount of sunlight that becomes noise may increase, adversely affecting sensing. Incidentally, the lower limit of the average value of light transmittance is not particularly set, but is preferably 0%.

Examples

Hereinafter, the invention will be described in further detail with reference to examples, but the invention is not limited to these examples. Incidentally, "parts" means parts by weight unless otherwise specified. Incidentally, evaluation was performed by the following methods.

[Evaluation of Resin Composition]

1. Average Value of Light Transmittance at 400 nm to 870 nm and at 870 nm to Absorption Maximum Wavelength of Component D

The spectral light transmittance of a continuous molded article prepared by the method described below was measured within a range of 300 nm to 2,500 nm using a UV-Vis-NIR spectrophotometer (V-770 manufactured by JASCO Corporation). From the obtained spectroscopic spectra, the average value of light transmittance at 400 nm to 870 nm and the average value of light transmittance at 870 nm to the absorption maximum wavelength of the component D were calculated.

2. Thermal Stability of Absorption Properties

In the same manner as in "1. Average Value of Light Transmittance at 400 nm to 870 nm and at 870 nm to Absorption Maximum Wavelength of Component D", the spectral light transmittance of a continuous molded article was measured. The spectroscopic spectra obtained were scanned from a wavelength of 400 nm toward the longer-wavelength side, and the wavelength at which the transmittance reached 70% or more for the first time (transmission wavelength $\lambda t$) was read. Also for a retention molded article, the transmission wavelength $\lambda tr$ was read in the same manner. A rating of "excellent" was given in the case where $Atr - \lambda t$ was 0 to 5, "good" was given in the case of 6 to 10, "fair" was given in the case of 11 to 20, and "poor" was given in the case of 21 or more.

3. Photostability of Absorption Properties:

In the same manner as in "1. Average Value of Light Transmittance at 400 nm to 870 nm and at 870 nm to Absorption Maximum Wavelength of Component D", the spectral light transmittance of a light exposed product was measured. The spectroscopic spectra obtained were scanned from a wavelength of 400 nm toward the longer-wavelength side, and the wavelength at which the transmittance reached 70% or more for the first time (transmission wavelength $\lambda tx$) was read. A rating of "excellent" was given in the case where $|\lambda tx - \lambda t|$ was 0 to 5, "good" was given in the case of 6 to 10, "fair" was given in the case of 11 to 20, and "poor" was given in the case of 21 or more.

4. Thermal Stability of Resin Composition (Viscosity Average Molecular Weight):

The viscosity average molecular weight ($M_0$) of a continuous molded article and the viscosity average molecular weight ($M_1$) of a retention molded article were measured by the following methods. A rating of "good" was given in the case where $M_0 - M_1 < 1,000$ was satisfied, and "poor" was given when not satisfied.

For the viscosity average molecular weight (M), first, the specific viscosity ($\eta_{SP}$) calculated by the following formula was determined from a solution of 0.7 g of a molded article, which was obtained by the method described below, dissolved in 100 ml of methylene chloride at 20°C using an Ostwald viscometer:

$$\text{specific viscosity } (\eta_{SP}) = (t - t_0)/t_0$$

[$t_0$ is the number of seconds taken for methylene chloride to fall, while t is the number of seconds taken for the sample solution to fall], and M was calculated from the obtained specific viscosity ($\eta_{SP}$) by the following formula.

$$\eta_{SP}/c = [\eta] + 0.45 \times [\eta]^2 c$$

(wherein [η] is intrinsic viscosity)

$$[\eta] = 1.23 \times 10^{-4} M^{0.83}$$

$$c = 0.7$$

5. Moisture and Heat Resistance of Resin Composition (Viscosity Average Molecular Weight):

The viscosity average molecular weight ($M_0$) of a continuous molded article and the viscosity average molecular weight ($M_2$) of a moisture- and heat-treated product were measured in the same manner as in "5. Thermal Stability of Resin Composition". A rating of "good" was given in the case where $M_0 - M_2 < 1{,}000$ was satisfied, and "poor" was given when not satisfied.

[Examples 1 to 27, Comparative Examples 1 to 8]

[Preparation of Resin Pellets]

Based on the components and contents shown in Tables 1 to 3, various ingredients were mixed using a tumbler and melt-kneaded at a cylinder temperature of 280°C using a twin-screw extruder (TEX30α, manufactured by Japan Steel Works, Ltd.) to obtain various pellets. The components used were as shown below.

[Preparation of Molded Article by Injection Molding]

The pellets obtained by the above method were dried in a hot-air circulation dryer at 120°C for 5 hours, and then molded into a plate-shaped test piece having a thickness of 3 mm using an injection molding machine (ROBOSHOT α-S100iA manufactured by FANUC Corporation) under the conditions of a cylinder temperature of 340°C and a mold temperature of 80°C. Molding was performed continuously, and after injection was stopped for 10 minutes while the resin was in the cylinder, molding was performed again. The product obtained by molding continuously without stopping injection midway was defined as a continuous molded article, while the product obtained by molding after stopping injection for 10 minutes while the resin was in the cylinder was defined as a retention molded article.

[Light Exposure Treatment of Molded Article]

A continuous molded article obtained by the above method was subjected to a light exposure treatment using a xenon weather meter (NX75Z, manufactured by Suga Test Instruments Co., Ltd.) for 1,000 hours under the conditions of a black panel temperature of 63°C, an in-bath temperature of 50°C, a relative humidity of 50%, and an irradiation intensity of 0.35 $W/m^2$ (@340 nm), and the resulting molded article was defined as a light exposed product.

[Moisture and Heat Treatment of Molded Article]

A continuous molded article obtained by the above method was subjected to a moisture and heat treatment using a thermo-hygrostat (PR-3J, ESPEC Corp.) for 1,000 hours under the conditions of a temperature of 80°C and a humidity of 85%, and the resulting molded article was defined as a moisture- and heat-treated product.

(Component A)

A-1: Panlite L-1225WX manufactured by Teijin Limited (viscosity average molecular weight: 19,700)
A-2: Panlite L-1225WP manufactured by Teijin Limited (viscosity average molecular weight: 22,400)
A-3: Polycarbonate resin produced by the following method

To a reactor equipped with a thermometer, a stirrer, and a reflux condenser, 3,844 parts of a 48% aqueous sodium hydroxide solution and 22,380 parts of ion exchange water were charged, and 1,992 parts of 2,2-bis(4-hydroxy-3-methylphenyl) propane (Bis-C, manufactured by Honshu Chemical Industry), 1,773 parts of 2,2-bis(4-hydroxyphenyl) propane (Bis-A, manufactured by Nippon Steel Chemical), and 7.53 parts of hydrosulfite (manufactured by Wako Pure Chemical Industries) were dissolved therein. Subsequently, 13,210 parts of methylene chloride was added, and, with

stirring, 2,000 parts of phosgene was blown in at 15 to 25°C over about 60 minutes. After the completion of the blowing of phosgene, 640 parts of a 48% aqueous sodium hydroxide solution and 93.2 parts of p-tert-butylphenol were added, stirring was resumed, and, after emulsification, 3.24 parts of triethylamine was added, followed by further stirring at 28 to 33°C for 1 hour to complete the reaction. After the completion of the reaction, the product was diluted with methylene chloride and washed with water, then acidified with hydrochloric acid and washed with water, and further repeatedly washed with water until the electrical conductivity of the aqueous phase became almost the same as that of ion exchange water, thereby giving a methylene chloride solution of a polycarbonate resin. Next, this solution was passed through a filter with 0.3 μm-openings and further added dropwise to warm water in a kneader equipped with an isolation chamber having a foreign material outlet in the bearing section, then the polycarbonate resin was flaked while distilling off methylene chloride, and, successively, the liquid-containing flakes were then pulverized and dried to obtain a powder. The viscosity average molecular weight was 20,000.

(Component B)

B-1: NUBIAN BLACK PC-5857 (Orient Chemical Industries Co., Ltd., absorption maximum wavelength: 599 nm)

(Component C)

C-1: Anthraquinone-based colorant SDO-11 (Arimoto Chemical Co., Ltd., absorption maximum wavelength: 761 nm)
C-2: Perylene-based colorant Lumogen IR-765 (BASF Japan Ltd., absorption maximum wavelength: 769 nm)
C-3: Heterocyclic colorant SDO-C33 (Arimoto Chemical Co., Ltd., absorption maximum wavelength: 847 nm)

(Component D)

D-1: Phthalocyanine-based colorant FDN-005 (Yamada Chemical Co., Ltd., absorption maximum wavelength: 911 nm)
D-2: Phthalocyanine-based colorant FDN-007 (Yamada Chemical Co., Ltd., absorption maximum wavelength: 956 nm)
D-3: Phthalocyanine-based colorant FDN-008 (Yamada Chemical Co., Ltd., absorption maximum wavelength: 992 nm)

(Component E)

E-1: Phosphorus-based thermal stabilizer ADK-STAB 2112 (ADEKA Corporation)
E-2: Phenol-based thermal stabilizer AO-50 (ADEKA Corporation)

(Component F)

F-1: Benzotriazole-based UV absorber TINUVIN 234 (BASF Japan Ltd.)
F-2: Benzotriazole-based UV absorber TINUVIN 326 (BASF Japan Ltd.)
F-3: Benzotriazole-based UV absorber SEESORB 709 (Shipro Kasei Kaisha, Ltd.)

(Other Components)

G-1: UNISTER H476S (NOF Corporation)
G-2: EW-400 (Riken Vitamin Co., Ltd.)
H-1: MARPROOF G-0250SP (NOF Corporation)

[Table 1]

| | | | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Component A | A-1 | Parts by weight | 100 | 100 | 100 | 100 | | | 100 | 100 | 100 | 100 | 100 | 100 |
| | A-2 | | | | | | 100 | | | | | | | |
| | A-3 | | | | | | | 100 | | | | | | |
| Component B | B-1 | | 0.2 | 0.2 | 0.2 | 0.2 | 0.2 | 0.2 | 0.2 | 0.2 | 0.2 | 1.1 | 0.03 | 0.9 |
| Component C | C-1 | | | | | | | | | | | | | |
| | C-2 | | | | | | | | | | | | | |
| | C-3 | | 0.03 | 0.03 | 0.03 | 0.03 | 0.03 | 0.03 | 0.03 | 0.03 | 0.03 | 0.03 | 0.03 | 0.1 |
| Component D | D-1 | | | | | | | | | | | | | |
| | D-2 | | | | | | | | | | | | | |
| | D-3 | | 0.06 | 0.06 | 0.06 | 0.06 | 0.06 | 0.06 | 0.06 | 0.06 | 0.06 | 0.06 | 0.06 | 0.03 |
| Component E | E-1 | | 0.03 | 0.03 | 0.03 | 0.03 | 0.03 | 0.02 | 0.4 | 0.005 | 0.003 | 0.03 | 0.03 | 0.03 |
| | E-2 | | | | | | | 0.05 | | | | | | |
| Component F | F-1 | | 0.2 | | | | 0.2 | 0.2 | 0.2 | 0.2 | 0.2 | 0.2 | 0.2 | 0.2 |
| | F-2 | | | 0.2 | | | | | | | | | | |
| | F-3 | | | | 0.2 | | | | | | | | | |
| Other Compon ents | G-1 | | 0.1 | 0.1 | 0.1 | 0.1 | 0.1 | | 0.1 | 0.1 | 0.1 | 0.1 | 0.1 | 0.1 |
| | G-2 | | | | | | | 0.1 | | | | | | |
| | H-1 | | 0.0075 | 0.0075 | 0.0075 | 0.0075 | 0.0075 | 0.0075 | 0.0075 | 0.0075 | 0.0075 | 0.0075 | 0.0075 | 0.0075 |

(continued)

| | | | Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Wavelength Pr operties of 3-mm-Thick Mol ded Article | Average value of light transmittance at 4 00 nm to 870 nm | % | 0.0 | 0.0 | 0.0 | 0.0 | 0.0 | 0.0 | 0.0 | 0.0 | 0.0 | 0.0 | 0.0 | 0.0 |
| | Average value of light transmittance at 8 70 nm to absorption maximum wave-lengt h of com-ponent D | % | 0.0 | 0.0 | 0.0 | 0.0 | 0.0 | 0.0 | 0.0 | 0.0 | 0.0 | 0.0 | 0.0 | 0.1 |
| | Continuous molded article | nm | 1195 | 1194 | 1195 | 1195 | 1195 | 1196 | 1195 | 1197 | 1199 | 1196 | 1195 | 1181 |
| | Retention molded article | nm | 1196 | 1196 | 1196 | 1195 | 1196 | 1197 | 1195 | 1202 | 1209 | 1198 | 1196 | 1183 |
| | | nm | 1 | 2 | 1 | 0 | 1 | 1 | 0 | 5 | 10 | 2 | 1 | 2 |
| | | - | Excellent | Excellent | Excellent | Excellent | Excellent | Excellent | Excellent | Excellent | Good | Excellent | Excellent | Excellent |
| | Light exposed product | nm | 1194 | 1191 | 1184 | 1176 | 1195 | 1195 | 1195 | 1196 | 1199 | 1195 | 1195 | 1180 |
| | | nm | -1 | -3 | -11 | -19 | 0 | -1 | 0 | -1 | 0 | -1 | 0 | -1 |
| | | - | Excellent | Excellent | Fair | Fair | Excellent | Excellent | Excellent | Excellent | Excellent | Excellent | Excellent | Excellent |
| Molecular Wei ght | Continuous molded article | - | 19600 | 19600 | 19600 | 19600 | 22200 | 19500 | 19700 | 19500 | 19500 | 19300 | 19600 | 19300 |
| | Retention molded article | - | 19500 | 19600 | 19500 | 19600 | 22000 | 19300 | 19600 | 19200 | 19000 | 18400 | 19600 | 18600 |
| | Moisture- and heat-treated product | - | 19100 | 19200 | 19100 | 19100 | 21700 | 19000 | 18800 | 19200 | 19400 | 18600 | 19200 | 18600 |
| | Thermal stability | - | 100 | 0 | 100 | 0 | 200 | 200 | 100 | 300 | 500 | 900 | 0 | 700 |
| | | - | Good | Good | Good | Good | Good | Good | Good | Good | Good | Good | Good | Good |
| | Moisture and heat resistance | - | 500 | 400 | 500 | 500 | 500 | 500 | 900 | 300 | 100 | 700 | 400 | 700 |
| | | - | Good | Good | Good | Good | Good | Good | Good | Good | Good | Good | Good | Good |

[Table 2]

| | | | Examples | | | | | | | | | | | |
|---|---|---|---|---|---|---|---|---|---|---|---|---|---|---|
| | | | 13 | 14 | 15 | 16 | 17 | 18 | 19 | 20 | 21 | 22 | 23 | 24 |
| Component A | A-1 | Parts by weight | 100 | 100 | 100 | 100 | 100 | 100 | 100 | 100 | 100 | 100 | 100 | 100 |
| | A-2 | | | | | | | | | | | | | |
| | A-3 | | | | | | | | | | | | | |
| Component B | B-1 | | 0.2 | 0.2 | 0.2 | 0.9 | 0.2 | 0.2 | 0.2 | 0.2 | 0.2 | 0.2 | 0.2 | 0.2 |
| Component C | C-1 | | | | | | | | | | | | 0.02 | |
| | C-2 | | | | | | | | | | | 0.05 | | |
| | C-3 | | 0.3 | 0.001 | 0.01 | 0.03 | 0.02 | 0.2 | 0.04 | 0.04 | 0.2 | | | 0.04 |
| Component D | D-1 | | | | | | | | | 0.02 | 0.001 | 0.05 | 0.05 | |
| | D-2 | | | | | | | | 0.03 | | | | | 0.03 |
| | D-3 | | 0.05 | 0.06 | 0.3 | 0.1 | 0.03 | 0.015 | | | | | | |
| Component E | E-1 | | 0.03 | 0.03 | 0.03 | 0.03 | 0.03 | 0.03 | 0.03 | 0.03 | 0.03 | 0.03 | 0.03 | 0.03 |
| | E-2 | | | | | | | | | | | | | |
| Component F | F-1 | | 0.2 | 0.2 | 0.2 | 0.2 | 0.2 | 0.2 | 0.2 | 0.2 | 0.2 | 0.2 | 0.2 | |
| | F-2 | | | | | | | | | | | | | |
| | F-3 | | | | | | | | | | | | | 0.2 |
| Other Components | G-1 | | 0.1 | 0.1 | 0.1 | 0.1 | 0.1 | 0.1 | 0.1 | 0.1 | 0.1 | 0.1 | 0.1 | 0.1 |
| | G-2 | | | | | | | | | | | | | |
| | H-1 | | 0.0075 | 0.0075 | 0.0075 | 0.0075 | 0.0075 | 0.0075 | 0.0075 | 0.0075 | 0.0075 | 0.0075 | 0.0075 | 0.0075 |

(continued)

| | | | Examples | | | | | | | | | | | |
|---|---|---|---|---|---|---|---|---|---|---|---|---|---|---|
| | | | 13 | 14 | 15 | 16 | 17 | 18 | 19 | 20 | 21 | 22 | 23 | 24 |
| Wavelength Properties of 3-mm-Thick Molded Article | Average value of light transmittance at 400 nm to 870 nm | % | 0.0 | 0.2 | 0.0 | 0.0 | 0.0 | 0.0 | 0.0 | 0.0 | 0.0 | 0.0 | 0.0 | 0.0 |
| | Average value of light transmittance at 870 nm to absorption maximum wavelength of component D | % | 0.0 | 0.0 | 0.0 | 0.0 | 0.5 | 0.9 | 0.0 | 0.0 | 0.0 | 0.0 | 0.0 | 0.0 |
| | Continuous molded article | nm | 1195 | 1195 | 1265 | 1207 | 1181 | 1154 | 1083 | 1009 | 1008 | 1031 | 1028 | 1083 |
| | Retention molded article | nm | 1197 | 1195 | 1267 | 1210 | 1182 | 1155 | 1085 | 1010 | 1009 | 1031 | 1030 | 1084 |
| | | nm | 2 | 0 | 2 | 3 | 1 | 1 | 2 | 1 | 1 | 0 | 2 | 1 |
| | | - | Excellent | Excellent | Excellent | Excellent | Excellent | Excellent | Excellent | Excellent | Excellent | Excellent | Excellent | Excellent |
| | Light exposed product | nm | 1193 | 1194 | 1262 | 1205 | 1181 | 1152 | 1082 | 1007 | 1007 | 1030 | 1028 | 1071 |
| | | nm | -2 | -1 | -3 | -2 | 0 | -2 | -1 | -2 | -1 | -1 | 0 | -12 |
| | | - | Excellent | Excellent | Excellent | Excellent | Excellent | Excellent | Excellent | Excellent | Excellent | Excellent | Excellent | Fair |
| Molecular Weight | Continuous molded article | - | 19400 | 19600 | 19400 | 19300 | 19500 | 19600 | 19500 | 19600 | 19600 | 19500 | 19500 | 19500 |
| | Retention molded article | - | 19100 | 19500 | 19000 | 18500 | 19500 | 19600 | 19500 | 19500 | 19500 | 19400 | 19400 | 19500 |
| | Moisture- and heat-treated product | - | 18800 | 19200 | 18800 | 18600 | 19100 | 19200 | 19000 | 19100 | 19200 | 19000 | 18900 | 19000 |
| | Thermal stability | - | 300 | 100 | 400 | 800 | 0 | 0 | 0 | 100 | 100 | 100 | 100 | 0 |
| | | - | Good | Good | Good | Good | Good | Good | Good | Good | Good | Good | Good | Good |
| | Moisture and heat resistance | - | 600 | 400 | 600 | 700 | 400 | 400 | 500 | 500 | 400 | 500 | 600 | 500 |
| | | - | Good | Good | Good | Good | Good | Good | Good | Good | Good | Good | Good | Good |

[Table 3]

| | | | Examples | | | Comparative Examples | | | | | | | |
|---|---|---|---|---|---|---|---|---|---|---|---|---|---|
| | | | 25 | 26 | 27 | 1 | 2 | 3 | 4 | 5 | 6 | 7 | 8 |
| Component A | A-1 | Parts by weight | 100 | 100 | 100 | 100 | 100 | 100 | 100 | 100 | 100 | 100 | 100 |
| | A-2 | | | | | | | | | | | | |
| | A-3 | | | | | | | | | | | | |
| Component B | B-1 | | 0.2 | 0.2 | 0.2 | 0.2 | 0.2 | 0.01 | 1.3 | 0.2 | 0.9 | 0.2 | 0.9 |
| Component C | C-1 | | | | | | | | | | | | |
| | C-2 | | | | | | | | | | | | |
| | C-3 | | 0.04 | 0.04 | 0.03 | 0.03 | 0.03 | 0.02 | 0.03 | 0.0008 | 0.4 | 0.03 | 0.1 |
| Component D | D-1 | | | | | | | | | | | | |
| | D-2 | | 0.03 | 0.03 | | | | | | | | | |
| | D-3 | | | | 0.06 | 0.06 | 0.06 | 0.03 | 0.06 | 0.03 | 0.1 | 0.0008 | 0.4 |
| Component E | E-1 | | 0.4 | 0.003 | 0.03 | 0.6 | 0.001 | 0.03 | 0.03 | 0.03 | 0.03 | 0.03 | 0.03 |
| | E-2 | | | | | | | | | | | | |
| Component F | F-1 | | 0.2 | 0.2 | | 0.2 | 0.2 | 0.2 | 0.2 | 0.2 | 0.2 | 0.2 | 0.2 |
| | F-2 | | | | | | | | | | | | |
| | F-3 | | | | | | | | | | | | |
| Other Components | G-1 | | 0.1 | 0.1 | | 0.1 | 0.1 | 0.1 | 0.1 | 0.1 | 0.1 | 0.1 | 0.1 |
| | G-2 | | | | | | | | | | | | |
| | H-1 | | 0.0075 | 0.0075 | | 0.0075 | 0.0075 | 0.0075 | 0.0075 | 0.0075 | 0.0075 | 0.0075 | 0.0075 |

(continued)

| | | | Examples | | | Comparative Examples | | | | | | | |
|---|---|---|---|---|---|---|---|---|---|---|---|---|---|
| | | | 25 | 26 | 27 | 1 | 2 | 3 | 4 | 5 | 6 | 7 | 8 |
| Wavelength Properties of 3-mm-Thick Molded Article | Average value of light transmittance at 400 nm to 870 nm | % | 0.0 | 0.0 | 0.0 | 0.0 | 0.0 | 1.7 | 0.0 | 1.9 | 0.0 | 0.0 | 0.0 |
| | Average value of light transmittance at 870 nm to absorption maximum wavelength of component D | % | 0.0 | 0.0 | 0.0 | 0.0 | 0.0 | 0.5 | 0.0 | 1.2 | 0.0 | 43.5 | 0.0 |
| | Continuous molded article | nm | 1083 | 1086 | 1195 | 1195 | 1203 | 1181 | 1196 | 1181 | 1210 | 1042 | 1287 |
| | Retention molded article | nm | 1083 | 1095 | 1196 | 1195 | 1225 | 1183 | 1200 | 1181 | 1217 | 1043 | 1299 |
| | | nm | 0 | 9 | 1 | 0 | 22 | 2 | 4 | 0 | 7 | 1 | 12 |
| | | - | Excellent | Good | Excellent | Excellent | Poor | Excellent | Excellent | Excellent | Good | Excellent | Fair |
| | Light exposed product | nm | 1082 | 1085 | 1177 | 1195 | 1202 | 1181 | 1194 | 1180 | 1206 | 1042 | 1279 |
| | | nm | -1 | -1 | -18 | 0 | -1 | 0 | -2 | -1 | -4 | 0 | -8 |
| | | - | Excellent | Excellent | Fair | Excellent | Excellent | Excellent | Excellent | Excellent | Excellent | Excellent | Good |
| Molecular Weight | Continuous molded article | - | 19500 | 19500 | 19600 | 19700 | 19500 | 19600 | 19200 | 19600 | 19100 | 19600 | 19000 |
| | Retention molded article | - | 19500 | 19000 | 19600 | 19600 | 18100 | 19500 | 18100 | 19600 | 17900 | 19500 | 17800 |
| | Moisture- and heat-treated product | - | 18700 | 19400 | 19200 | 18300 | 19400 | 19200 | 18500 | 19100 | 18300 | 19200 | 18100 |
| | Thermal stability | - | 0 | 500 | 0 | 100 | 1400 | 100 | 1100 | 0 | 1200 | 100 | 1200 |
| | | - | Good | Good | Good | Good | Poor | Good | Poor | Good | Poor | Good | Poor |
| | Moisture and heat resistance | - | 800 | 100 | 400 | 1400 | 100 | 400 | 700 | 500 | 800 | 400 | 900 |
| | | - | Good | Good | Good | Poor | Good | Good | Good | Good | Good | Good | Good |

In the examples shown in Tables 1 to 3, all the resin compositions are excellent in thermal stability and moisture and heat resistance and have wavelength-selective absorption properties. Thus, they can deal with various infrared light sources for use in infrared sensors in autonomous driving systems. Further, the results showed excellent thermal stability and photostability of their absorption properties.

In the case where the contents of component B and component C were less than the lower limit, the results showed that the average value of light transmittance at 400 nm to 870 nm was more than 1.5%. In the case where the content of component D was less than the lower limit, the results showed that the average value of light transmittance at 870 nm to the absorption maximum wavelength of the component D was more than 1.5%. Meanwhile, in the case where the content was more than the upper limit, the thermal stability of the resin composition deteriorated. In the case where the content of component E was less than the lower limit, the results showed poor thermal stability of the resin composition and its absorption properties, while in the case where the content was more than the upper limit, the results showed poor moisture and heat resistance of the resin composition.

## Claims

**1.** A resin composition comprising, per (A) 100 parts by weight of an aromatic polycarbonate resin (component A), (B) 0.03 to **1.2** parts by weight of a colorant having an absorption maximum at less than 650 nm (component B), (C) 0.001 to 0.3 parts by weight of a colorant having an absorption maximum at 650 nm or more and less than 870 nm (component C), (D) 0.001 to 0.3 parts by weight of a colorant having an absorption maximum at 870 nm or more and less than 1,000 nm (component D), and (E) 0.003 to 0.5 parts by weight of a phosphorus-based thermal stabilizer and/or a phenol-based thermal stabilizer (component E),
the resin composition being configured such that an average value of through-thickness light transmittance of a 3-mm-thick molded article thereof at 400 nm to 870 nm is 1.5% or less.

**2.** The resin composition according to claim 1, wherein an average value of through-thickness light transmittance of a 3-mm-thick molded article thereof at 870 nm to a wavelength at which absorption by the component D is maximum is 1.5% or less.

**3.** The resin composition according to claim 1 or 2, wherein the component C and the component D are each at least one colorant selected from the group consisting of an anthraquinone-based colorant, a phthalocyanine-based colorant, a perylene-based colorant, and a heterocyclic colorant.

**4.** The resin composition according to claim 1 or 2, comprising (F) 0.01 to 1 part by weight of a benzotriazole-based UV absorber (component F) per 100 parts by weight of the component **A.**

**5.** The resin composition according to claim 1 or 2, wherein the component A has a viscosity average molecular weight of 24,000 or less.

**6.** A molded article obtainable by molding the resin composition according to claim 1 or **2.**

**7.** The molded article according to claim 6, being a covering material for covering an infrared sensor.

**8.** The molded article according to claim 7, being a covering material for covering an infrared sensor used for LiDAR for detecting vehicles and buildings.

## INTERNATIONAL SEARCH REPORT

International application No.
**PCT/JP2023/029839**

**A. CLASSIFICATION OF SUBJECT MATTER**

***C08L 69/00***(2006.01)i; ***C08K 3/013***(2018.01)i; ***C08K 3/014***(2018.01)i
FI: C08L69/00; C08K3/013; C08K3/014

According to International Patent Classification (IPC) or to both national classification and IPC

**B. FIELDS SEARCHED**

Minimum documentation searched (classification system followed by classification symbols)

C08L69/00; C08K3/013; C08K3/014

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-188011 A (MITSUBISHI ENGINEERING PLASTICS CORP.) 13 December 2021 (2021-12-13)<br>claims, paragraphs [0093], [0103], examples | 1-8 |
| X | JP 2021-188010 A (MITSUBISHI ENGINEERING PLASTICS CORP.) 13 December 2021 (2021-12-13)<br>claims, paragraphs [0096], [0104], examples | 1-8 |
| X | JP 2022-87945 A (SUMIKA POLYCARBONATE LTD.) 14 June 2022 (2022-06-14)<br>claims, paragraphs [0088]-[0091], [0102], examples | 1-8 |
| A | JP 2021-147470 A (SUMIKA POLYCARBONATE LTD.) 27 September 2021 (2021-09-27)<br>entire text | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/029839**

| Patent document cited in search report | Publication date (day/month/year) | Patent family member(s) | Publication date (day/month/year) |
|---|---|---|---|
| JP 2021-188011 A | 13 December 2021 | (Family: none) | |
| JP 2021-188010 A | 13 December 2021 | (Family: none) | |
| JP 2022-87945 A | 14 June 2022 | (Family: none) | |
| JP 2021-147470 A | 27 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5040827 B
- JP 6354888 B
- WO 2019022169 A
- JP 6658942 B
- JP 2021188011 A
- JP 2021147470 A
- JP H06172508 A
- JP H0827370 A
- JP 2001055435 A
- JP 2002117580 A